# EUROPÄISCHE PATENTANMELDUNG

(11) **EP 0 784 133 A1**
(43) Veröffentlichungstag der Anmeldung: **16.07.1997**
(21) Anmeldenummer: 97100112.8
(22) Anmeldetag: 07.01.1997
(51) Int. Cl.: E04F 15/024, F24D 3/16

(54) **Installationsboden**

(30) Priorität: 10.01.1996 DE 19600658
(71) Anmelder: SICOWA Verfahrenstechnik für Baustoffe GmbH & Co. KG, D-52072 Aachen (DE); ProMineral Gesellschaft zur Verwendung von Mineralstoffen mbH, 50129 Bergheim (DE)
(72) Erfinder: Schmitz, Wolfgang, Dr., 52511 Geilenkirchen (DE); Nitsche, Christoph, Dipl.-Ing., 52078 Aachen (DE)
(74) Vertreter: Sparing - Röhl - Henseler Patentanwälte

(57) **Zusammenfassung**

Die Erfindung betrifft einen Installationsboden mit einer Vielzahl von rechteckigen Doppelbodenplatten (1), die in einem vorbestimmten Raster auf einer Aufständerung unter Belassung von Aufnahmeräumen (4) für Installationsleitungen aufgelegt sind. Hierbei sind entsprechend dem Heizbedarf eine Reihe von Doppelbodenplatten (1) jeweils mit einem flachen Heizelement (5) versehen, wobei die Heizelemente (5) kraftschlüssig und lösbar an den jeweiligen Unterseiten der Doppelbodenplatten (1) flächig anliegend mit diesen verbunden sind, auf der der Doppelbodenplatte (1) abgewandten Seite eine Wärmedämmschicht (6) tragen und mit in den Aufnahmeräumen (4) angeordneten Leitungsanschlüssen für Heizmedium und/oder untereinander entsprechend einer vorbestimmten Schaltung lösbar verbunden sind.

## Beschreibung

Die Erfindung betrifft einen Installationsboden nach dem Oberbegriff des Anspruchs 1.

Üblicherweise werden bei derartigen Installationsböden (vgl. z.B. die DE-U- 81 27 531), wie sie häufig in Verwaltungsbauten, im Ladenbau etc. eingesetzt werden, Ständeraufbauten verwendet, auf denen Doppelbodenplatten eines bestimmten Rastermaßes lose verlegt werden, um sie später wieder aufnehmen zu können, wenn die in dem Hohlraum unter den Doppelbodenplatten befindliche Installation erreicht werden muß. Auch Heizeinrichtungen werden in den Aufnahmeräumen zwischen den Ständeraufbauten separat verlegt. Abgesehen davon, daß die Flexibilität derartiger Heizeinrichtungen in bezug auf eine Anpassung an spezielle, gegebenenfalls geänderte Bedürfnisse sehr gering ist, wird nur eine schlechte Wärmeübertragung in die Installationsbodenplatten erzielt, so daß ein Teil der Heizenergie ungenutzt abfließt.

Außerdem ist es bekannt, Fußbodenheizungen unter Verwendung von flexiblen, im Estrich eingebetteten Kunststoffschlangen zu installieren. Neben anderen Nachteilen sind diese jedoch in ihrem Ansprechen sehr träge, auch hier wird je nach Raumnutzungskonzept ein Großteil der Heizenergie ungenutzt abgeführt und der Estrich ist durch einen speziellen Aufheizzyklus während ca. 20 Tagen zu trocknen, um einer Rißbildung möglichst vorzubeugen. Trotzdem treten Risse häufiger auf. Die Zugänglichkeit ist nur über eine Zerstörung des Estrichs gegeben.

Aufgabe der Erfindung ist es, einen Installationsboden nach dem Oberbegriff des Anspruchs 1 zu schaffen, der mit einer Heizung versehen ist, die energiesparend ist, eine gute Wärmeübertragung gewährleistet und bezüglich der jeweiligen Anforderungen flexibel ist.

Diese Aufgabe wird entsprechend dem kennzeichnenden Teil des Anspruchs 1 gelöst.

Dadurch, daß entsprechend dem Heizbedarf eine Reihe von Doppelbodenplatten jeweils mit einem flachen Heizelement versehen sind, wobei die Heizelemente kraftschlüssig und lösbar an den jeweiligen Unterseiten der Doppelbodenplatten flächig anliegend mit diesen verbunden sind, auf der der Doppelbodenplatte abgewandten Seite eine Wärmedämmschicht tragen und mit in den Aufnahmeräumen angeordneten Leitungsanschlüssen für Heizmedium und/oder untereinander entsprechend einer vorbestimmten Schaltung lösbar verbunden sind, werden im Vergleich zu einer im Estrich verlegten Fußbodenheizung die Funktionen "Aufnehmen der Verkehrslasten" und "Heizen" entkoppelt. Nach Installation ist der Boden fertig und sofort belegbar. Die Aufbauhöhe kann bei etwa 8 cm oder höher liegen, wobei die Stärke der Doppelbodenplatten über den Heizelementen bei 20 bis 25 mm im Vergleich zu 30 cm Estrich über den Heizschlangen einer im Estrich verlegten Fußbodenheizung liegen kann. Hierdurch wird die Heizung zusätzlich schneller regelbar. Im Dauerbetrieb ist eine geringere Vorlauftemperatur möglich. Spannungsrisse treten nicht auf.

Die Heizelemente können aus Metall oder Kunststoff gefertigt werden.

Durch den modularen Aufbau läßt sich genau dort ein Heizelement anbringen, wo es benötigt wird (z.B. unter dem Platz eines Schreibtischs im Verwaltungsbau oder unter dem Platz einer Sitzecke im Wohnungsbau). Die Plazierung der Heizelemente aufweisenden Doppelbodenplatten ist entsprechend der Möblierung und dergleichen änderbar. Jedes einzelne Heizelement ist aus dem Heizkreis entfernbar oder hinzufügbar, indem eine entsprechende Verbindungsleitung unterbrochen oder angeschlossen wird.

Die Heizelemente sind lösbar mit den Doppelbodenplatten etwa durch Schrauben oder Verspannen mittels Federelementen od.dgl. verbunden, damit im Schadensfall die betroffenen Heizelemente einfach austauschbar sind.

Die nach unten und gegebenenfalls auch seitlich wärmegedämmten Heizelemente aufweisenden Doppelbodenplatten werden fertig montiert und qualitätsgesichert angeliefert. Zum Anschließen an Zu- und Abläufe bzw. zum Verbinden von Heizelementen untereinander werden vorzugsweise Klick-Fittings oder andere Schnellkupplungen gegebenenfalls zusammen mit entsprechenden flexiblen Verbindungsschläuchen verwendet.

Die flächige Anlage des Heizelements an der Unterseite der Doppelbodenplatte stellt einen guten Wärmeübergang durch Wärmeleitung sicher.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt schematisch im Schnitt eine Ausführungsform eines Installationsbodens.

Fig. 2 und 3 zeigen schematisch zwei Ausführungsformen eines Heizelements für den Installationsboden im Schnitt.

Fig. 4 und 5 zeigen schematisch im Schnitt weitere Ausführungsformen eines Installationsbodens.

Fig. 6 und 7 zeigen schematisch eine Draufsicht auf zwei Ausführungsformen eines Installationsbodens.

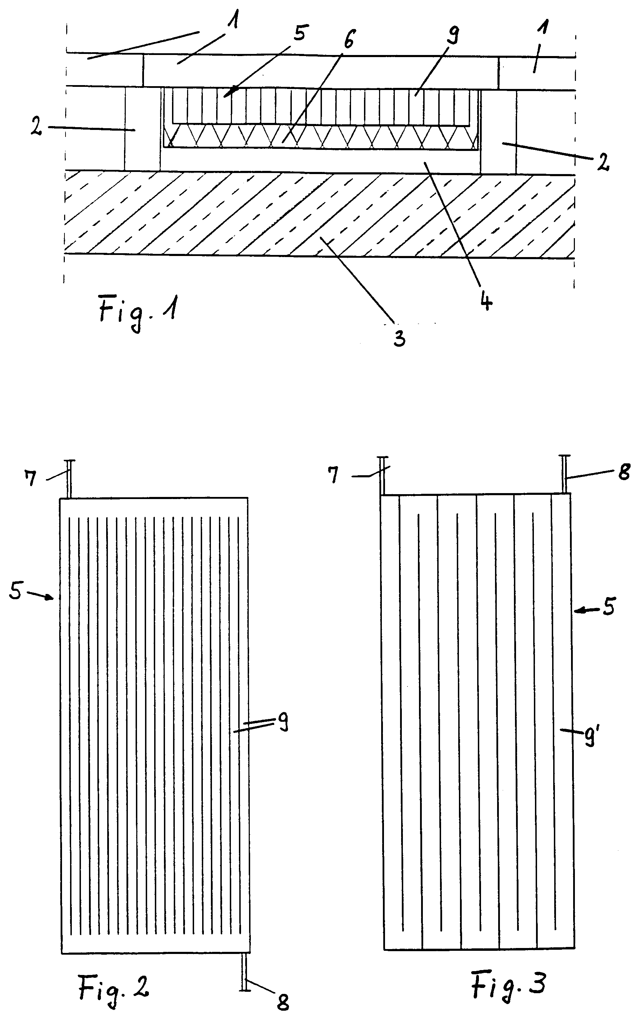

Der in Fig. 1 dargestellte Installationsboden umfaßt eine Vielzahl von quadratischen oder rechteckigen Doppelbodenplatten 1 vorbestimmter Größe, die einem vorbestimmten Rastermaß von beispielsweise 120 cm x 60 cm des Installationsbodens entspricht. Die Doppelbodenplatten 1, etwa Gipsfaserplatten oder gegebenenfalls faserverstärkte Calciumhydrosilikat-gebundene Platten, sind auf Auflagebalken 2 aus mineralischem Material, beispielsweise demselben Material wie die Doppelbodenplatten 1, die eine Aufständerung bilden, verlegt. Die allgemein im Schnitt rechteckigen oder auch trapezförmigen Auflagebalken 2 sind in zueinander parallelen, beabstandeten Reihen entsprechend dem Raster beispielsweise auf einer zum Nivellieren dienenden (nicht dargestellten) Mörtelunterlage auf dem eigentlichen (Beton-)Boden 3 verlegt.

Gegebenenfalls kann auch zunächst eine Wärmedämmschicht und/oder eine elastische Zwischenlage unter den Auflagebalken 2, letztere als Trittschallschottung, auf dem Boden 3 aufgebracht werden (nicht dargestellt).

Zwischen zwei parallelen Reihen von Auflagebalken 2, dem Boden 3 und den Doppelbodenplatten 1 wird jeweils ein gegebenenfalls flach ausgebildeter, kanalartiger Aufnahmeraum 4 gebildet, in dem Installationsleitungen verschiedenster Art verlegt werden können.

Die Auflagebalken 2 jeder Reihe können mit Abstand zueinander verlegt sein, um Durchtrittsöffnungen für Installationsleitungen von einem Aufnahmeraum 4 zum anderen zu bilden, die bei Nichtgebrauch mit Mörtel od.dgl. verschlossen werden können.

Die Doppelbodenplatten 1 können ferner mit den Auflagebalken 2 durch Schrauben, Nageln oder Kleben verspannt werden und bilden dann eine einheitliche nivellierte Tragfläche, wobei außerdem eine Verspachtelung der Fugen zwischen den Doppelbodenplatten 1 vorgenommen werden kann.

Auf der so gebildeten Fläche kann irgendein Bodenbelag, etwa ein Teppichboden, Keramikfliesen, Holzparkett od.dgl. verlegt werden.

Die Höhe der Auflagebalken 2 richtet sich nach der für den Installationsboden vorgesehenen Höhe. Im Wohnungsbau ist diese relativ niedrig und kann bei etwa 8 cm liegen.

Eine Reihe von Doppelbodenplatten 1 ist entsprechend dem Bedarf unterseitig jeweils mit einem flachen Heizelement 5 versehen, das kraftschlüssig und lösbar an der Unterseite der Doppelbodenplatte 1 flächig anliegend mit diesen verbunden ist sowie etwas kleinflächiger als die Doppelbodenplatte 1 ist, so daß es zwischen die Auflagebalken 2 paßt. Auf der der Doppelbodenplatte 1 abgewandten Seite ist das Heizelement 5 von einer Wärmedämmschicht 6 umgeben, die das Heizelement 5 auch an den Schmalseiten umgibt. Nicht dargestellte (Zulauf- und Ablauf-)Anschlüsse 7, 8 des Heizelements 5 sind durch die Wärmedämmschicht 6 hindurch seitlich abgeführt, um zum Anschließen zugänglich zu sein.

Die Wärmedämmschicht 6 kann in einem Gehäuse aus Metall oder Kunststoff gekapselt sein, das das Heizelement 5 aufnimmt, selbst unter der Doppelbodenplatte 1 befestigt ist und so das Heizelement 5 in flächiger Anlage an der Doppelbodenplatte 1 hält.

Hierbei kann das Gehäuse für die Wärmedämmschicht 6 getrennt oder einstückig mit dem Mantel des Heizelements 5 ausgebildet sein. Im ersteren Fall ist zwischen dem Gehäuse und dem Mantel soviel Spiel vorzusehen, daß die Wärmeausdehnung des Heizelements 5, wenn dieses vom Heizmedium durchflossen wird, aufgenommen wird, so daß die flächige Anlage des Heizelements 5 an der Doppelbodenplatte 1 nicht beeinträchtigt wird. Im zweiten Fall ist das Gehäuse entsprechend an der Doppelbodenplatte 1 beispielsweise über Schienen od.dgl. so anzubringen, daß die Wärmedilatation stattfinden kann, ohne die flächige Anlage des Heizelements 5 zu beeinträchtigen.

Das Heizelement 5 kann, wie in Fig. 2 dargestellt, eine Vielzahl von parallelen Kanälen 9 aufweisen, die gemeinsam von einem Heizmedium, insbesondere Wasser, von einem Zulaufanschluß 7 an einer Seite zu einem Rücklaufanschluß 8 an der anderen Seite durchströmt werden.

Stattdessen kann aber auch ein mäanderförmiger Kanal 9' vorgesehen sein, so daß sich Zulauf- und Rücklaufanschluß 7, 8 auf der derselben Seite befinden, Fig. 3.

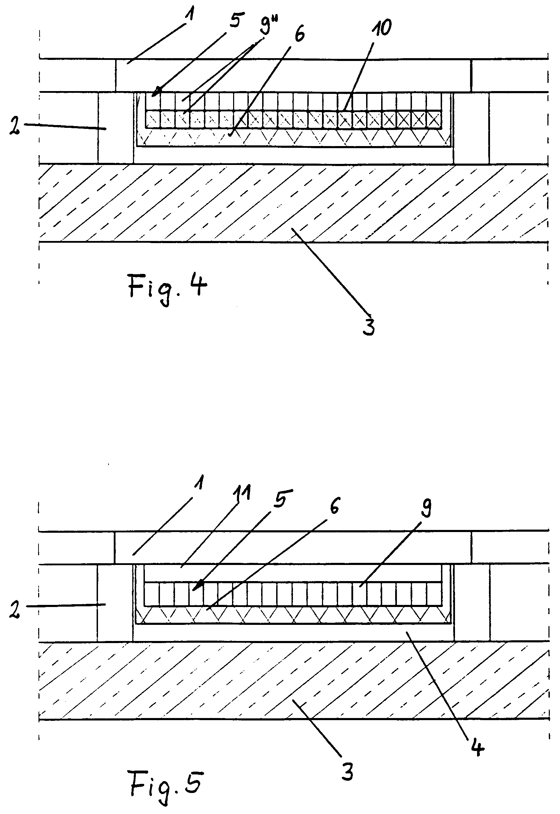

Wie in Fig. 4 dargestellt, können die parallelen Kanäle auch durch eine parallel zur Unterseite der Doppelbodenplatte 1 verlaufende Trennwand 10 in obere und untere Kanäle 9'' getrennt sein, wobei die oberen über den Zulaufanschluß 7 versorgt werden, während das abgekühlte Heizmedium aus den unteren über den Rücklaufanschluß 8 abgeführt wird.

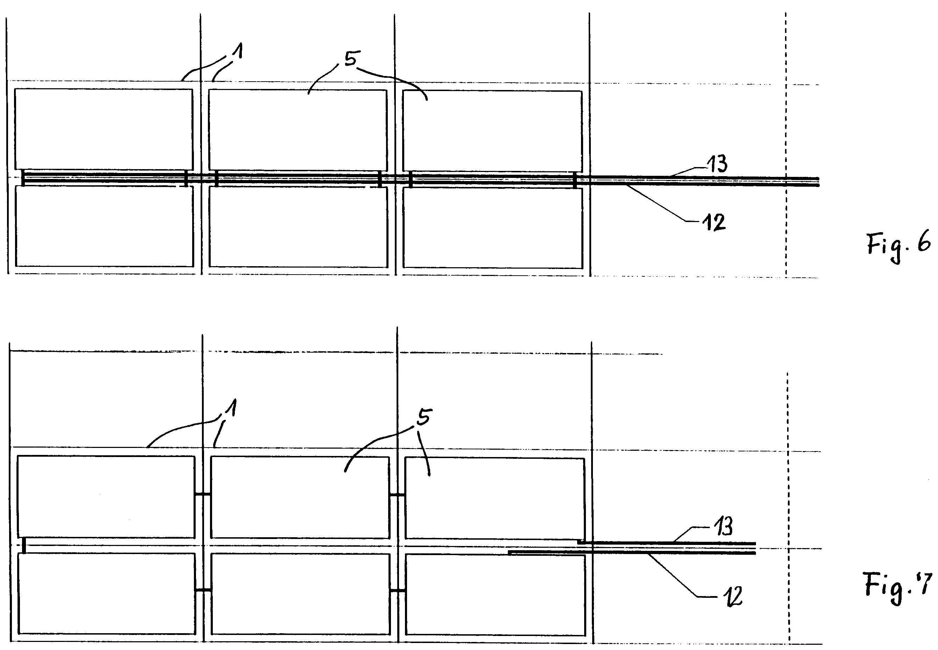

Zusätzlich kann, wie in Fig. 5 dargestellt, benachbart zur Doppelbodenplatte 1 unabhängig von einer Ausbildung des Heizelements 5 nach Fig. 2, 3 oder 4 eine Kammer 11 zur Aufnahme eines Wärmespeichermediums, z.B. ein entsprechendes Thermoöl, vorgesehen sein, so daß das Wärmespeichermedium zwischen Doppelbodenplatte 1 und Heizelement 5 angeordnet ist.

Wie in Fig. 6 und 7 dargestellt, können die einzelnen Heizelemente 5 parallel zueinander an einen Zulauf 12 und einen Rücklauf 13 angeschlossen oder auch hintereinander geschaltet sein, wobei das erste Heizelement 5 an den Zulauf 12 und das letzte an den Rücklauf 13 angeschlossen ist. Zuläufe 12 und Rückläufe 13 sind in den Aufnahmeräumen 4 angeordnet. Kombinationen von Parallel- und Hintereinanderschaltung sind ebenso möglich.

## Patentansprüche

1. Installationsboden mit einer Vielzahl von rechteckigen Doppelbodenplatten (1), die in einem vorbestimmten Raster auf einer Aufständerung unter Belassung von Aufnahmeräumen (4) für Installationsleitungen aufgelegt sind, dadurch **gekennzeichnet**, daß entsprechend dem Heizbedarf eine Reihe von Doppelbodenplatten (1) jeweils mit einem flachen Heizelement (5) versehen sind, wobei die Heizelemente (5) kraftschlüssig und lösbar an den jeweiligen Unterseiten der Doppelbodenplatten (1) flächig anliegend mit diesen verbunden sind, auf der der Doppelbodenplatte (1) abgewandten Seite eine Wärmedämmschicht (6) tragen und mit in den Aufnahmeräumen (4) angeordneten Leitungsanschlüssen für Heizmedium und/oder untereinander entsprechend einer vorbestimmten Schaltung lösbar verbunden sind.

2. Installationsboden nach Anspruch 1, dadurch gekennzeichnet, daß die Wärmedämmschicht (6) in einem Gehäuse angeordnet ist.

3. Installationsboden nach Anspruch 2, dadurch gekennzeichnet, daß das Gehäuse der Wärmedämmschicht (6) einstückig mit dem Heizelement (5) verbunden ist.

4. Installationsboden nach einem der Ansprüche 1 bis 3, dadurch gekennzeichnet, daß zwischen Heizelement (5) und Doppelbodenplatte (1) eine Kammer (11) zur Aufnahme eines Wärmespeichermediums vorgesehen ist.

5. Installationsboden nach einem der Ansprüche 1 bis 4, dadurch gekennzeichnet, daß das Heizelement (5) zweischichtig mit einem Zulaufkanalbereich benachbart zur Doppelbodenplatte (1) und einem darunter befindlichen Rücklaufkanalbereich aufgebaut ist.

6. Installationsboden nach einem der Ansprüche 1 bis 5, dadurch gekennzeichnet, daß das Heizelement (5) einen oder mehrere, parallele Kanäle (9, 9', 9'') zum Hindurchführen von Heizmedium aufweist.

7. Installationsboden nach Anspruch 6, dadurch gekennzeichnet, daß das Heizelement (5) einen mäanderförmigen Kanal (9') zum Hindurchführen von Heizmedium aufweist.

8. Installationsboden nach einem der Ansprüche 1 bis 7, dadurch gekennzeichnet, daß die Heizelemente (5) über Schnellkupplungen und gegebenenfalls Schlauchleitungen mit Zuläufen (12) und Rückläufen (13) bzw. untereinander verbunden sind.

9. Installationsboden nach einem der Ansprüche 1 bis 8, dadurch gekennzeichnet, daß die Heizelemente (5) parallel und/oder hintereinander geschaltet sind.
